Europäisches Patentamt

(19) European Patent Office

Office européen des brevets

(11) Numéro de publication: **0 255 429**
**A2**

(12) **DEMANDE DE BREVET EUROPEEN**

(21) Numéro de dépôt: 87401708.0

(22) Date de dépôt: 22.07.87

(51) Int. Cl.⁴: **A 21 B 2/00**

(30) Priorité: 31.07.86 FR 8611145

(43) Date de publication de la demande:
03.02.88 Bulletin 88/05

(84) Etats contractants désignés:
AT BE CH DE ES GB GR IT LI LU NL SE

(71) Demandeur: **Daumoinx, Gilles**
**Résidence Bellevue Bâtiment A**
**Crans Sur Sierre Valais (CH)**

(72) Inventeur: **Daumoinx, Gilles**
**Résidence Bellevue Bâtiment A**
**Crans Sur Sierre Valais (CH)**

(74) Mandataire: **Bressand, Georges et al**
**c/o CABINET LAVOIX 2 Place d'Estienne d'Orves**
**F-75441 Paris Cedex 09 (FR)**

(54) **Ensemble de cuisson et de présentation de produits alimentaires relativement plats et peu épais, tels que notamment des pizzas ou des quiches.**

(57) Cet ensemble de cuisson est caractérisé en ce qu'il comporte un bâti (1) comprenant des moyens de cuisson (3) desdits produits, au-dessus desquels est prévu un compartiment (4) de présentation de produits cuits, ledit compartiment étant formé par une tablette (5) de présentation, en contact thermique avec les moyens de cuisson (3) et entourée par un habillage (6) en matériau transparent, de sorte qu'après leur cuisson, les produits disposés dans le compartiment (4) de présentation sont maintenus en température.

FIG.1

EP 0 255 429 A2

## Description

Ensemble de cuisson et de présentation de produits alimentaires relativement plats et peu épais, tels que notamment des pizzas ou des quiches.

La présente invention concerne un ensemble de cuisson et de présentation de produits alimentaires relativement plats et peu épais tels que notamment des pizzas ou des quiches.

On connaît dans l'état de la technique un certain nombre d'ensembles permettant de cuire des produits alimentaires, mais ces ensembles ne sont pas équipés pour présenter ces produits à la vente pendant une période de temps relativement longue. En effet, ce type de produits est souvent préparé à la demande ce qui présente un certain nombre d'inconvénients notamment au niveau du temps d'attente pour le consommateur. Par ailleurs, ces ensembles présentent des encombrements relativement importants du fait de leur conception.

Le but de l'invention est donc de résoudre ces problèmes en proposant un ensemble qui permette de cuire un certain nombre de produits alimentaires et de les présenter à la vente tout en conservant leurs qualités et en maintenant leur température pendant une période de temps relativement longue.

A cet effet, l'invention a pour object un ensemble de cuisson et de présentation de produits alimentaires relativement plats et peu épais tels que notamment des pizzas ou des quiches, caractérisé en ce qu'il comporte un bâti comprenant des moyens de cuisson desdits produits, au-dessus desquels est prévu un compartiment de présentation de produits cuits, ledit compartiment étant formé par une tablette de présentation, en contact thermique avec lesdits moyens de cuisson et entourée par un habillage en matériau transparent, de sorte qu'après leur cuisson, les produits disposés dans le compartiment de présentation sont maintenus en température.

Avantageusement, l'ensemble comprend des moyens de transport des produits à travers les moyens de cuisson et ces moyens de cuisson sont constitués par un four à infrarouges.

L'invention sera mieux comprise à l'aide de la description qui va suivre, donnée uniquement à titre d'exemple et faite en se référant aux dessins annexés, sur lesquels :

    - la Fig.1 représente une vue arrière en perspective d'un ensemble selon l'invention; et
    - la Fig.2 représente une vue avant en perspective d'un ensemble selon l'invention.

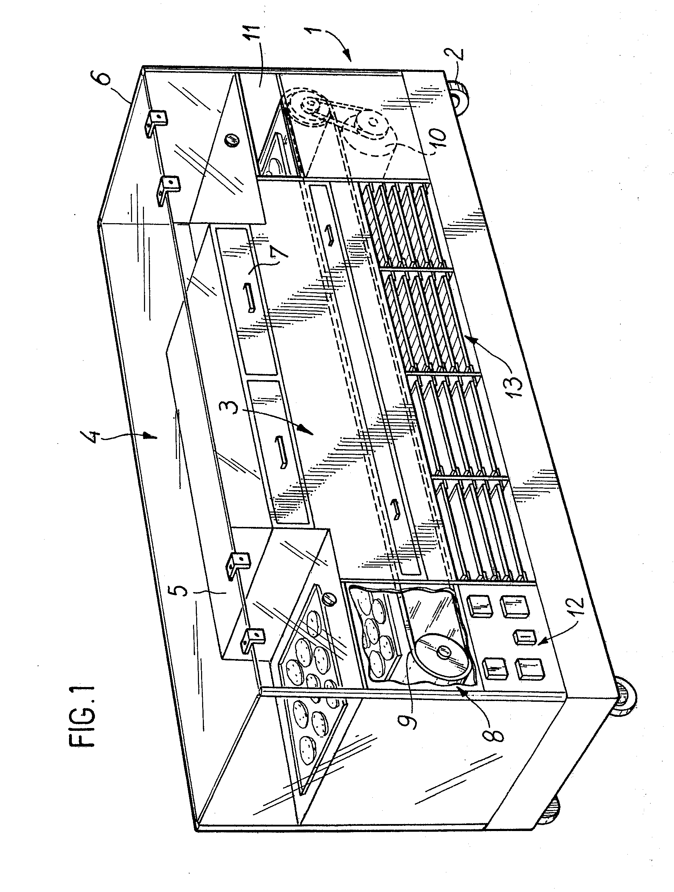

Ainsi qu'on peut le voir sur cette Fig.1, un ensemble selon l'invention comporte un bâti 1, par exemple monté sur roulettes 2, comprenant des moyens de cuisson 3 de produits, au-dessus desquels est prévu un compartiment 4 de présentation de produits cuits.

Ce compartiment 4 est formé par une tablette de présentation 5, pouvant présenter plusieurs niveaux, posée sur les moyens de cuisson 3 et donc en contact thermique avec ceux-ci et entourée par un habillage 6 en matériau transparent tel que du verre. Ainsi les produits après leur cuisson, sont disposés dans le compartiment de présentation 4 et sont maintenus en température de manière à conserver toutes leurs qualités.

Des tiroirs, par exemple 7, peuvent également être prévus sous cette tablette de présentation, au-dessus des moyens de cuisson.

Les moyens de cuisson 3 sont avantageusement constitués par un four à infrarouges à travers lesquels circulent les produits disposés sur des moyens de transport 8.

Ces moyens de transport comprennent par exemple un tapis convoyeur 9 actionné par un moteur électrique 10 et débouchant de part et d'autre desdits moyens de cuisson sous le compartiment de présentation 4.

Le bâti comporte également deux lumières, dont une seule 11 est représentée, sur la face arrière de travail du bâti, disposées en regard du tapis convoyeur 9 et de part et d'autre des moyens de cuisson 3, pour permettre à un utilisateur de déposer des produits crus sur le tapis convoyeur 9 à l'entrée des moyens de cuisson et de récupérer des produits cuits en sortie de ceux-ci.

L'ensemble selon l'invention comporte également un tableau d'alimentation électrique 12 dans lequel sont prévus des moyens de variation de la vitesse de déplacement du tapis convoyeur 9 de manière à permettre un réglage du temps de passage des produits dans les moyens de cuisson pour adapter celui-ci à chaque type de produits. Ainsi par exemple, le temps de passage de certains produits dans ces moyens de cuisson peut être de l'ordre de 6 à 7 mn, alors que pour d'autres produits, il n'est que de 4 mn.

Des moyens de rangement 13 de plateaux sur lesquels sont disposés les produits crus peuvent également être prévus dans la partie inférieure du bâti 1, sous les moyens de cuisson.

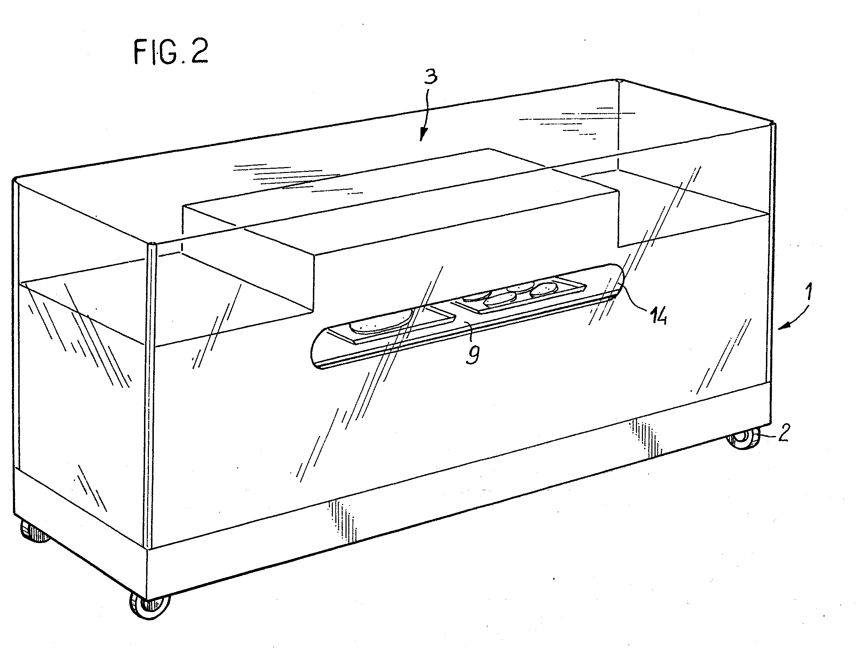

Si l'on se reporte maintenant à la Fig.2, on constate que le bâti 1 comporte sur sa face avant de présentation, une fenêtre 14 ménagée au niveau des moyens de cuisson 3 de manière à permettre une surveillance de la cuisson des produits par exemple par un consommateur éventuel.

L'utilisateur d'un tel ensemble saisit donc dans un premier temps les plateaux sur lesquels sont disposés des produits crus, dans les moyens de rangement 13, les engage dans la lumière d'entrée des moyens de cuisson, sur le tapis convoyeur qui trans-porte alors ces plateaux à travers les moyens de cuisson jusqu'à la sortie de ceux-ci où l'utilisateur peut s'en saisir par la lumière de sortie 11. Les plateaux sont ensuite disposés dans le compartiment de présentation où les produits sont maintenus à température en raison du fait que la tablette de présentation 5 est en contact thermique avec les moyens de cuisson 3 maintenant ainsi à une certaine température le compartiment de présentation.

Il va de soi que cet ensemble est équipé de divers moyens de régulation de température connus en soi permettant de régler la température du four et celle du compartiment de présentation.

Par ailleurs, bien que l'on ait mentionné que les moyens de cuisson soient constitués par un four à infrarouges, particulièrement adapté pour la cuisson de produits alimentaires relativement plats et peu épais tels que notamment des pizzas ou des quiches, il va de soi que d'autres types de fours peuvent être envisagés.

Enfin, la structure de cet ensemble est telle que l'encombrement de celui-ci est relativement limité et lui confère un caractère attractif à la vente en permettant au consommateur de suivre les différentes étapes de préparation du produit, en lui permettant notamment d'en suivre la cuisson par la fenêtre ménagée dans la face avant de présentation du bâti.

**Revendications**

1. Ensemble de cuisson et de présentation de produits alimentaires relativement plats et peu épais, tels que notamment des pizzas ou des quiches, caractérisé en ce qu'il comporte un bâti (1) comprenant des moyens de cuisson (3) desdits produits, au-dessus desquels est prévu un compartiment (4) de présentation de produits cuits, ledit compartiment étant formé par une tablette (5) de présentation, en contact thermique avec les moyens de cuisson (3) et entourée par un habillage (6) en matériau transparent, de sorte qu'après leur cuisson, les produits disposés dans le compartiment (4) de présentation sont maintenus en température.

2. Ensemble selon la revendication 1, caractérisé en ce qu'il comprend des moyens de transport (8) des produits à travers les moyens de cuisson (3).

3. Ensemble selon la revendication 2, caractérisé en ce que les moyens de transport (8) comprennent un tapis convoyeur (9) actionné par un moteur électrique (10) et débouchant de part et d'autre desdits moyens de cuisson (3) sous le compartiment (4) de présentation.

4. Ensemble selon la revendication 3, caractérisé en ce qu'il est prévu deux lumières (11) sur la face arrière de travail du bâti, disposées en regard du tapis convoyeur (9) et de part et d'autre des moyens de cuisson (3), pour permettre de déposer des produits crus sur le tapis convoyeur (9) à l'entrée des moyens de cuisson (3) et de récupérer des produits cuits en sortie de ceux-ci.

5. Ensemble selon l'une quelconque des revendications précédentes, caractérisé en ce que les moyens de cuisson (3) sont constitués par un four à infrarouges.

6. Ensemble selon l'une quelconque des revendications 2 à 5, caractérisé en ce qu'il est prévu des moyens de variation (12) de la vitesse de déplacement du tapis convoyeur (9), de manière à faire varier le temps de passage des produits dans les moyens de cuisson (3).

7. Ensemble selon l'une quelconque de revendications précédentes, caractérisé en ce que des moyens de rangement (13) de plateaux sur lesquels sont disposés des produits crus, sont prévus dans la partie inférieure du bâti (1) sous lesdits moyens de cuisson (3).

8. Ensemble selon l'une quelconque des revendications précédentes, caractérisé en ce qu'une fenêtre (14) est ménagée dans la face avant de présentation du bâti au niveau des moyens de cuisson (3) de manière à permettre la surveillance de la cuisson desdits produits.

FIG.1

0255429

FIG.2